# EUROPÄISCHE PATENTANMELDUNG

(11) **EP 4 332 719 A1**
(43) Veröffentlichungstag der Anmeldung: **06.03.2024**
(21) Anmeldenummer: 22192669.4
(22) Anmeldetag: 29.08.2022
(51) Int. Cl.: G06F 1/16

(54) **TRAGBARES DIGITALES ANZEIGEGERÄT, VERFAHREN ZUM BETREIBEN EINES TRAGBAREN DIGITALEN ANZEIGEGERÄTES SOWIE ANORDNUNG ZUR DURCHFÜHRUNG DES VERFAHRENS**

(71) Anmelder: Siemens Aktiengesellschaft, 80333 München (DE)
(72) Erfinder: Groten, Raphaela, 52070 Aachen (DE); Johnson, Rebecca, 81739 München (DE)
(74) Vertreter: Siemens Patent Attorneys

(57) **Zusammenfassung**

Die Erfindung betrifft ein tragbares digitales Anzeigegerät, bei dem durch das Anzeigegerät ein erster Zustand mit einer ersten Dimension einer Grundfläche und ein zweiter Zustand mit einer zweiten Grundfläche einnehmbar ist, im ersten Zustand die Grundfläche im Wesentlichen der Anzeigenfläche entspricht, wobei in diesem Zustand zumindest eine Anzeige von digitalen Inhalten und durch ein erstes Modul durchgeführte Erfassung zumindest von semantischen Inhalten und/oder zumindest einer Steuerungsoption, vorzugsweise jeweils durch Auswertung Modul erfasster Berührungen der Oberfläche, durchführbar ist, und wobei die Größe der Anzeigenfläche derart ausgestaltet ist, dass die Anzeigenfläche als so genanntes Whiteboard senkrecht und/oder waagerecht fixier- und durch eine Vielzahl von Personen zeitgleich nutzbar ist, im zweiten Zustand die Grundfläche derart dimensioniert ist, dass das Anzeigegerät, insbesondere einhändig und/oder in einer Tragetasche, transportierbar ist, es mit einer ersten Schnittstelle zumindest zum Bezug von einer Quelle, insbesondere Computer und/oder Speichereinrichtung, bereitgestellter darstellbarer digitaler Inhalte eingerichtet ist, es mit einer Energiespeichereinrichtung sowie einer zweiten mit der Energiespeichereinrichtung funktional verbundenen Schnittstelle derart ausgestaltet, dass die Energiespeichereinrichtung über die zweite Schnittstelleneinrichtung aufladbar ist. Ferner betrifft die Erfindung ein Verfahren zum Betreiben des Anzeigengerätes und eine Anordnung zur Durchführung des Verfahrens.

## Beschreibung

Die Erfindung betrifft ein tragbares digitales Anzeigegerät gemäß Gattungsbegriff des Anspruchs 1, ein Verfahren zum Betreiben des tragbaren digitalen Anzeigegerätes gemäß Gattungsbegriff des Anspruchs 10 sowie eine Anordnung zur Durchführung des Verfahrens gemäß Gattungsbegriff des Anspruchs 11.

Kooperatives Arbeiten, beispielsweise an so genannten Whiteboards oder Flipcharts, ist bekannt. Insbesondere um ein kreatives Umfeld zu schaffen, ist es insbesondere bei Flipcharts bekannt, diese auch Outdoor zu nutzen. Diese sind jedoch nur in der Waagerechten nutzbar und die Witterung, insbesondere Wind und Feuchte, machen die Nutzung nur unter bestimmten Bedingungen möglich. Will man einen, beispielsweise dem Infektionsschutz geschuldeten, Abstand zwischen den kooperierenden Personen gewähren oder eine bessere Sicht auf die Inhalte, so müsste man größere Flipcharts bereitstellen oder ein starres Whiteboard nach draußen transportieren. Letzteres wäre zwar gegenüber dem Wetter nicht so empfindlich und man könnte es beispielsweise auch hinlegen, so dass sich die Personen mit Abstand um das Board verteilen könnten, aber es wäre wie das vergrößerte Flipchart auch, einfach zu sperrig für eine Zwischenlagerung aber auch den Transport nach draußen. Das Gleiche gilt für digitalisierende Flipcharts oder berührungssensitive, LED, Technologie basierte Whiteboards, die zwar ermöglichen Inhalte auf den Displays zu digitalisieren aber durch deren Gewicht und Größe eher nicht für einen Transport nach Außen in Betracht gezogen werden. Zudem haben beide einen Energiebedarf, der einen Stromnetzanschluss erforderlich macht.

Bisher ist keine technische Lösung bekannt, die die genannten Nachteile zufriedenstellend löst.

Die der Erfindung zugrundeliegende Aufgabe ist es daher, eine Lösung anzugeben, die die Nachteile des Standes der Technik überwindet, insbesondere liegt die technische Aufgabe darin, eine technische Lösung anzugeben, die ein kooperatives Arbeiten, insbesondere im Outdoorbereich, verbessert.

Die Aufgabe wird erfindungsgemäß durch das tragbare digitale Anzeigegerät gemäß Gattungsbegriff des Anspruchs 1, durch dessen Merkmale, durch das Verfahren zum Betreiben eines tragbaren digitalen Anzeigegerätes gemäß Gattungsbegriff des Anspruchs 10, durch dessen Merkmale sowie durch die Anordnung zur Durchführung des Verfahrens gemäß Gattungsbegriff des Anspruchs 11 gelöst.

Sofern es in der nachfolgenden Beschreibung nicht anders angegeben ist, beziehen sich die Begriffe "durchführen", "umsetzen", "transformieren", "übertragen", "berechnen", "rechnergestützt", "rechnen", "feststellen", "generieren", "konfigurieren", "rekonstruieren", "ermitteln", "erfassen" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" oder "computergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder einem "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger sowie eine Kombination aus einer oder mehrerer dieser Elemente zur Bildung einer so genannten Cloud verstanden werden.

Unter einem "Modul" kann im Zusammenhang mit der Erfindung beispielsweise mindestens ein Prozessor und/oder mindestens eine Speichereinheit zum Speichern von Programmbefehlen verstanden werden, welche physisch an einem Ort, beispielsweise einem Teil einer Leiterplatte, oder auch auf mehreren Entitäten eines Netzwerks verteilt funktional zusammenwirkend verbunden sind. Beispielsweise ist der Prozessor speziell dazu eingerichtet, die Programmbefehle derart auszuführen, dass der Prozessor Funktionen ausführt, um das erfindungsgemäße Verfahren oder einen Schritt des erfindungsgemäßen Verfahrens zu implementieren oder realisieren.

Bei dem erfindungsgemäßen tragbaren digitalen Anzeigegerät,
a) ist durch das Anzeigegerät ein erster Zustand mit einer ersten Dimension einer Grundfläche und ein zweiter Zustand mit einer zweiten Grundfläche einnehmbar,
b) entspricht im ersten Zustand die Grundfläche im Wesentlichen der Anzeigenfläche, wobei in diesem Zustand zumindest eine Anzeige von digitalen Inhalten und durch ein erstes Modul durchgeführte Erfassung zumindest von semantischen Inhalten und/oder zumindest einer Steuerungsoption, vorzugsweise jeweils durch Auswertung Modul erfasster Berührungen der Oberfläche, durchführbar, und wobei die Größe der Anzeigenfläche derart ausgestaltet ist, dass die Anzeigenfläche als so genanntes Whiteboard senkrecht und/oder waagerecht fixier- und durch eine Vielzahl von Personen zeitgleich nutzbar ist,
c) ist im zweiten Zustand die Grundfläche derart dimensioniert, dass das Anzeigegerät, insbesondere einhändig und/oder in einer Tragetasche, transportierbar ist,
d) ist das Anzeigegerät mit einer ersten Schnittstelle zumindest zum Bezug von einer Quelle, insbesondere Computer und/oder Speichereinrichtung, bereitgestellter darstellbarer digitaler Inhalte eingerichtet,
e) ist das Anzeigegerät mit einer Energiespeichereinrichtung sowie einer zweiten mit der Energiespeichereinrichtung funktional verbundenen Schnittstelle derart ausgestaltet, dass die Energiespeichereinrichtung über die zweite Schnittstelleneinrichtung aufladbar ist.

Das erfindungsgemäße Verfahren ist zum Betreiben eines tragbaren digitalen Anzeigegerätes und/oder seiner Weiterbildungen geeignet.

Das erfindungsgemäße Verfahren stellt einzelne oder kombinierte Schritte bereit, die dabei helfen die Vorteile des erfindungsgemäßen tragbaren digitalen Anzeigegerätes zu verwirklichen, beispielsweise in dem es die einzelnen Funktionseinheiten und/oder die Gesamtheit der Funktionseinheiten gemäß dem erfindungsgemäßen tragbaren digitalen Anzeigegerät und der Weiterbildungen davon steuert bzw. die Funktion bereitstellt. Das Verfahren bezieht dabei auch einzelne zum Betreiben des Anzeigegerätes erforderliche Schritte etwaiger, beispielsweise durch Weiterbildungen möglicher und/oder erforderlicher externer, mit dem tragbaren digitalen Anzeigegerät interagierender, Geräte ein. Das Verfahren betrifft also die erfindungsgemäße Anordnung, die das Verfahren durchführend das tragbare digitale Anzeigegerät betreibt und somit die erfindungsgemäßen Vorteile des tragbaren digitalen Anzeigegerätes gemäß Erfindung verwirklicht, sei es allein durch das Anzeigegerät oder in Verbindung mit weiteren Geräten. Insbesondere betrifft das Verfahren computerimplementierte, beispielsweise auf einem oder mehreren Einheiten der Anordnung verteilte, alle oder einzelne Schritte des Verfahrens durchführende technische Zustände einzelner oder alle beteiligten Einheiten beeinflussender Prozesse.

Weitere vorteilhafte Ausgestaltungen und Weiterbildungen der Erfindung sind durch die Unteransprüche angegeben.

Gemäß einer Weiterbildung des tragbaren digitalen Anzeigegerätes, ist die Berührungserfassung durch eine Ausgestaltung der Oberfläche des Anzeigegerätes zur so genannten, insbesondere Multi-, Touchfunktionalität eingerichtet.

Mit dieser Weiterbildung wird es möglich handschriftliche Eingaben direkt, ggf. für eine präzisere Linienführung mit speziellem, insbesondere kapazitiven, Stift, auf dem Anzeigegerät durchzuführen und sofortiges visuelles Feedback zu erhalten. Ferner können Felder, die Menüpunkte und/oder virtuelle Schaltflächen darstellen, durch Berührung zur Steuerung von Zuständen und/oder Funktionen des Anzeigegerätes und/oder Eigenschaften der dargestellten Objekte genutzt werden.

Gemäß einer alternativen oder ergänzenden Weiterbildung des tragbaren digitalen Anzeigegerätes ist die Erfassung durch eine integrierte Spracherkennung eingerichtet.

Mit dieser Weiterbildung können beispielsweise Kommandos erfasst werden, die einen Zustandswechsel der Anzeige und/oder Funktion des Anzeigegeräts bewirken. Ferner können so auch semantische Inhalte erfasst und dargestellt werden. Dies werden in der Regel sprachliche Inhalte sein, denkbar ist aber auch grafische Inhalte mit Hilfe von Kommandos auszuwählen und durch das Anzeigegerät - ebenfalls durch Kommandos platziert und/oder dimensioniert - anzeigen und/oder verändern zu lassen. Ein weiterer Vorteil liegt darin, dass bei kooperativen Arbeiten zwischen den Akteuren Abstand gehalten werden kann, beispielsweise, um die freie Sicht auf das Anzeigegerät aufrechtzuerhalten aber auch um gesundheitliche Aspekte, wie Infektionsschutz, zu berücksichtigen.

Bei einer weiteren Weiterbildung des tragbaren digitalen Anzeigegerätes, nach einem der vorhergehenden Ansprüche, ist die erste Schnittstelle als unidirektionale Bildschnittstelle, beispielsweise nach dem HDMI-Standard, und/oder als bidirektionale drahtgebundene Kommunikationsschnittstelle, beispielsweise eine so genannte USB-Schnittstelle, und/oder bidirektionale drahtlose Kommunikationsschnittstelle, beispielsweise eine nach dem WLAN-, Bluetooth- und/oder einem Nahfeldkommunikationsstandard, wie dem NFC-, Standard, ausgestaltet.

Um beispielsweise den Ressourcenbedarf sowie die Dimension des Anzeigegeräts zu minimieren kann dessen Funktionalität weitestgehend nur auf die Darstellung von Inhalten reduziert werden, dann ist diese Weiterbildung als eine alternative Ausgestaltung zu einer komplexeren, insbesondere Computerarchitektur aufweisenden Ausgestaltung zu sehen, insbesondere wenn eine unidirektionale Bildschnittstelle zum Einsatz kommt. Bei zuletzt genannter Ausgestaltung kann diese Weiterbildung zusätzliche, also ergänzende, Funktionalitäten bieten, insbesondere bei Einsatz von bidirektionalen Kommunikationsschnittstellen. Hierdurch sind alle gängigen, insbesondere Computerimplementierten, Interaktionen mit externen Einrichtungen, wie Rechnern bzw. Rechnernetzen, Speichereinrichtungen möglich. Ist diese Kommunikationsschnittstelle drahtlos ausgestaltet, wird eine weitere Verbesserung hinsichtlich des erfindungsgemäßen Grundgedankens die Arbeit mobil und kooperativ, bei gleichzeitiger Gewährleistung von notwendiger bzw. ausreichender Distanz, zu gestalten, erzielt.

Gemäß einer Weiterbildung des tragbaren digitalen Anzeigegerätes ist die zweite Schnittstelle als, insbesondere zugleich als erste Schnittstelle nutzbar eingerichtete, USB-Schnittstelle ausgestaltet.

Durch Kombination von so viel als möglichen Funktionen in einer Schnittstelle, wird der Ressourcenbedarf reduziert, ferner werden Freiheitsgrade, insbesondere hinsichtlich der Dimensionierung und/oder des Designs des tragbaren digitalen Anzeigegeräts sowie des Raums für andere Funktionseinheiten, wie etwa weitere Schnittstellen, erhöht.

Gemäß einer Weiterbildung des tragbaren digitalen Anzeigegerätes ist das Anzeigegerät bevorzugt als so genanntes ePaper ausgestaltet, wobei der Übergang vom ersten Zustand zum zweiten Zustand durch ein Rollen und/oder ein Falten des ePapers durchführbar ist.

Durch diese Weiterbildung wird ein Whiteboard für einen mobilen Einsatz bereitgestellt, der aufgrund der Eigenschaften von ePaper oder dem Einsatz von eInk Technologie hinsichtlich Sichtbarkeit und Kontrast bei Helligkeit ähnlichen Displaytechnologien, vor allem für einen Einsatz Outdoor geeignet ist, da selbst direkte Sonneneinstrahlung auf die Sichtbarkeit des dargestellten Inhalts wenig Einfluss hat. Ferner sind diese Technologien bezüglich des Energiebedarfs hervorragend für einen längeren Einsatz ohne Stromquelle geeignet. Sie ermöglichen auch eine sehr dünne, mechanisch sehr flexible Ausführung von Bildschirmen, so dass es auf einfache Weise für ein Zusammenrollen oder Zusammenfalten des erfindungsgemäßen tragbaren digitalen Anzeigegeräts ausgestaltet sein kann. Das Zusammenrollen bzw. Zusammenfalten wiederum erhöht die Mobilität, weil die Größe der Anzeige im zweiten Zustand so weit reduziert werden kann, dass es in gängige Transporttaschen und/oder mit einer Hand getragen werden kann. Für den Einsatz kann es dann wieder auseinandergefaltet bzw. -gerollt werden und dann waagrecht, beispielsweise auf einem Tisch, dem Boden oder senkrecht, beispielsweise eine Außenwand oder ein entsprechender Displayständer, angebracht werden.

Bei einer weiteren Weiterbildung des tragbaren digitalen Anzeigegerätes ist das erste Modul derart ausgestaltet, dass es zur Erkennung von Handschrift- und/oder, insbesondere gesprochenen, Worten ausgestaltet ist und bei Erkennen semantischer Inhalte diese einer Wandlung in ein als mindestens in einem Textformat darstellbares digitales Datum und bei Nichterkennen als grafische Eingabe interpretiert und als Bild darstellbares digitales Datum unterzieht.

Mit dieser Weiterbildung ist das Anzeigegerät selbst befähigt analoge Eingaben in digitale Repräsentationen mit gleicher semantischer Bedeutung, gegebenenfalls aber in unterschiedlichen Formaten, umzusetzen. Durch diese bereitgestellte Umsetzung ist dann in einem zweiten Schritt einfach möglich ein gängiges digitales Dateiformat zu wählen, in welchem der semantische Inhalt festgehalten, editiert und/oder gespeichert und gegebenenfalls zur Benutzung durch andere Geräte übermittelt bzw. transportabel gemacht werden kann. Ferner wird die Erkennbarkeit des Inhalts für am kooperativen Arbeiten Beteiligte verbessert, weil individuelle Ausprägungen der Eingaben durch genormte Zeichenformate egalisiert werden.

Bei einer weiteren Alternative oder ergänzenden Weiterbildung des erfindungsgemäßen tragbaren digitalen Anzeigegeräts, nach einem der vorhergehenden Ansprüche, ist das erste Modul derart ausgestaltet, dass es derart die Steuerung des Anzeigegerätes durchführt, dass es
a) zur Erkennung von zumindest einem Steuerzeichen aus erfassten semantischen Inhalten befähigt ist,
b) durch das mindestens eine Steuerzeichen als Befehl und/oder Auswahl markierte Eingaben erfasst,
c) mindestens eine dem Befehl oder der Auswahl zugeordnete Zustandsänderung von zumindest Teilen des Anzeigegerätes und/oder dargestellten Inhalts durchführt.

Diese Weiterbildung ermöglicht also eingegebenen Inhalten besondere Bedeutung zu verleihen, um eine den Mark-up Sprachen, wie dem XML oder HTML, ähnliche Funktionalität zu erhalten, also Strukturierung von Texten und/oder anderen Inhalten, Befehle zur Steuerung der Anzeige und/oder den Anzeigegeräten selbst. Hierdurch kann das erfindungsgemäße tragbare digitale Anzeigegerät auf flexible Weise gesteuert werden, ohne etwa virtuelle Schaltflächen darstellen zu müssen, die Raum für Inhalte nehmen, oder in- oder externe MMI Schnittstellen zu diesem Zweck vorsehen zu müssen bzw. diese vielleicht lediglich auf einen On- und/oder Off Schalter zu reduzieren. Selbstredend ist diese Weiterbildung auch für akustische Eingaben anwendbar, indem Mark-up artige Zeichenfolgen oder semantisch leichter verständliche vordefinierte Befehle gesprochen, erfasst und ausgeführt werden.

Alternativ oder ergänzend kann das erfindungsgemäße tragbare digitale Anzeigegerät derart weitergebildet sein, dass das Anzeigegerät eine dritte Schnittstelle aufweist, die derart ausgestaltet ist, dass es im ersten Zustand drahtlos übermittelte, elektromagnetische, insbesondere optische, Signale zumindest als innerhalb der Anzeigenfläche auftreffend interpretierbare Bewegung einer entfernten Signalquelle dem ersten Modul zur Erkennung semantischer Inhalte präsentiert.

Mit dieser Weiterbildung sind mit gerichteter elektromagnetischer Strahlung, wie Infrarot, Bluetooth, WLAN oder Laser, emittierende Handgeräte wie Laserpointer oder Fernbedienungen für die Eingabe von semantischen Inhalten verwendbar. Die Oberfläche könnte beispielsweise auftreffende Laserpointer Lichtpunkte zur Verfolgung eines Linienzugs, also einer Eingabe, verwenden.

Damit wird eine lautlose Eingabe aus der Distanz möglich. Ähnlich und aufwändiger können hiermit auch Bewegungen von Fernsteuerungen bzw. entsprechenden handlichen die den genannten Technologien entsprechenden Sendemodule beinhaltenden Geräten, wie beispielsweise Handys, zur Eingabe genutzt werden, wie es beispielsweise bei über WLAN mit Fernsehern verbundenen Fernbedienungen zur Steuerung eines Mauszeigers bekannt ist.

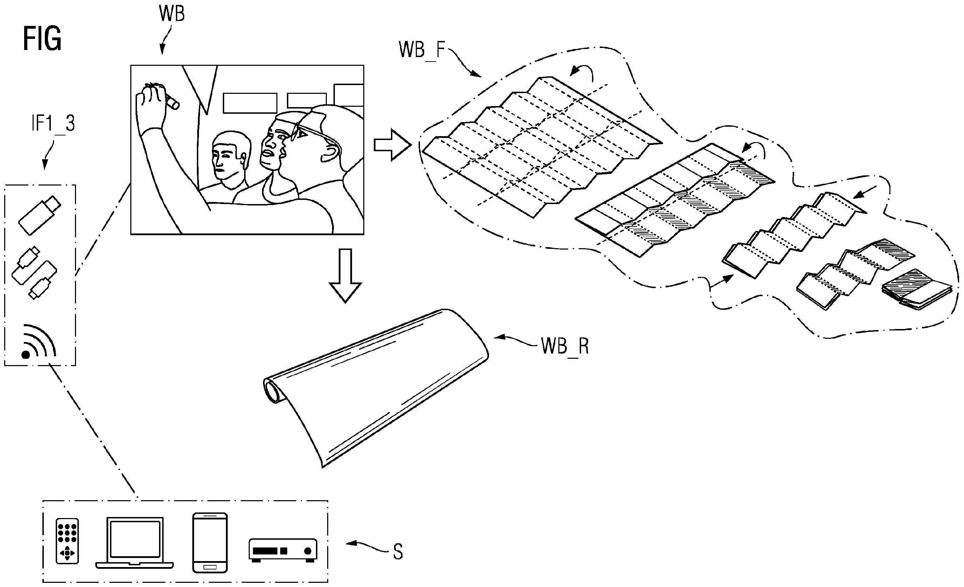

Weitere Vorteile und Details der Erfindung werden anhand der in der einzigen Figur dargestellten Ausführungsbeispiele der Erfindung erläutert. Dabei zeigt die
- FIGUR: schematisch als ein Schritt eines Ausführungsbeispiels des erfindungsgemäßen Verfahrens eine Detektion und Überführung von Symbolen aus einem 2D Modell in ein 3D Modell am Beispiel von Feueralarmsystemen.

Bei den im Folgenden in der FIGUR erläuterten Ausführungsbeispielen handelt es sich um bevorzugte Ausführungsformen und Weiterbildungen der Erfindung.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Zu erkennen ist ein erfindungsgemäßes Whiteboard WB, welches von mehreren Personen, also in Kooperation, genutzt wird.

Die Eingabe kann gemäß dem Ausführungsbeispiel von Hand, mittels einem so genannten Touchpen, und/oder mit einem Finger oder mehreren Fingern erfolgen. Im Rahmen von Infektionsschutzmaßnahmen wird allerdings eine Touchpeneingabe zu bevorzugen sein.

Alternativ oder ergänzend können auch berührungslose Eingaben realisiert sein, beispielsweise durch Spracheingabe oder Bewegungserfassung elektromagnetische Strahlung abgebender Geräte wie Funksende-/Funkempfangseinrichtungen, insbesondere nach dem WLAN oder Bluetooth Funkstandard ausgebildet, wie sie in Smartphones, Rechnern, Fernsteuerungen zu finden sind, oder Laser- bzw. Infrarotstrahler, die in Laserpointern oder ebenfalls Fernbedienungen zu finden sind.

Das dargestellte erfindungsgemäße Whiteboard WB ist ein auf eine Größe eines typischen Whiteboards dimensioniertes ePaper Display. D.h. Präsentationen können ohne Weiteres unabhängig von direkter Sonneneinstrahlung draußen genutzt werden.

Es weist auch gegenüber beispielsweise LED Displays, die inzwischen in großen Größen, also Whiteboarddimensionen, verfügbar sind, und auch über Multi-Touch-Fähigkeit verfügen, welche auch eine Kooperation zwischen mehreren Akteuren erlaubt, den Vorteil auf, dass es leicht zu transportieren ist, sehr guten Kontrast bietet und zugleich sehr geringen Energiebedarf hat.

Um Inhalte, die eingegeben worden sind, zu sichern oder externe Inhalte darzustellen bzw. eine Steuerung zu erlauben, kann das erfindungsgemäße Whiteboard einen oder mehrere Schnittstellen IF1_3 integrieren. Diese können drahtgebunden sein und beispielsweise eine Kommunikation und/oder Energieversorgung gemäß USB C Standard gewährleisten und/oder auch drahtlos zu einer Kommunikation eines der für einen Datenaustausch bekannten Funkstandards, wie WLAN, Bluetooth oder NFC ausgestaltet sein.

Damit lassen sich gemäß Ausführungsbeispiel beliebige Quellen für die Darstellung aber auch Steuerung anschließen. Damit kann beispielsweise der Bedarf an Schaltungen und Leistungsbedarf im erfindungsgemäßen Display geringgehalten werden. Es bietet aber auch somit diverse Möglichkeiten die Darstellung auf der Anzeige zu speichern.

Hierzu wird das erfindungsgemäße Whiteboard befähigt die Inhalte zu digitalisieren, gegebenenfalls in ein Dateiformat für den Austausch zu bringen. Diese Funktionalität kann dabei auch teilweise oder ganz von, beispielsweise über die genannten Schnittstellen S, mit dem Whiteboard verbundenen Geräten bereitgestellt werden, beispielsweise in dem ein erfindungsgemäßes Computerprogrammprodukt auf dem Gerät installiert ist und dieses Gerät für die erfindungsgemäße Verfahrensweise die Funktionseinheiten, wie beispielsweise Module und Schnittstellen IF1_3, aufweist.

In der FIGUR ist ferner schematisch die mechanische Flexibilität und Ausgestaltung gemäß Erfindung an zwei Ausführungsbeispielen gezeigt.

Rechts vom erfindungsgemäßen Whiteboard ist eine faltbare Variante des Whiteboards WB_F dargestellt. Zu erkennen ist wie beispielsweise eine Faltung durchgeführt werden kann. Hierfür könnte das erfindungsgemäße faltbare Whiteboard so präpariert sein, dass die Kanten für die Faltung vorgegeben sind und sich beispielsweise eine von Faltkarten bekannte Faltung realisieren lässt. Ein derart gefaltetes Whiteboard WB F kann ohne Weiteres in die Hand genommen oder in eine Tasche gesteckt werden, so dass ein Transport enorm vereinfacht wird und die Outdoornutzung einfach vorbereitet und durchgeführt werden kann. Natürlich ist die Erfindung auf eine derartige Faltung beschränkt. Es reichen auch wenige Faltungen und/oder es kann auch ohne Präparation, also völlig frei faltbar ausgestaltet sein.

Unterhalb der schematisch dargestellten kooperativen Zusammenarbeit ist ein zweites durch seine Rollbarkeit gekennzeichnetes Whiteboard WB_R dargestellt. Dieses kann wie bekannte Werbungsdisplays einfach zusammengerollt transportieren werden, wobei es zwar etwas sperriger ist als die faltbare Variante WB_F, aber das leichte Gewicht des ePapers macht es auch in dieser Form einhändig transportierbar. Als Transportbehältnis könnte etwa ein aus der Architektur bekanntes Röhrenbehältnis dienen.

Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind.

Des Weiteren sind die beschriebenen Ausführungsformen auch durch weitere der bereits beschriebenen Merkmale der Erfindung ergänzbar.

In anderen Worten integriert die Erfindung durch erfinderische Überlegungen gefundene technische Einzellösungen zu einer die der Erfindung zugrunde liegende Aufgabe lösenden flexiblen Einheit, die beispielsweise wie bei den gezeigten Ausführungsbeispielen durch ein tragbares, falt- und/oder rollbares, mobiles e-Paper-Display gegeben ist, welches somit als digitales Whitepaper bzw. Whiteboard einsetzbar ist und gemäß Weiterbildung auf vorteilhafte Weise auch multitouchfähig ausgestaltet sein kann und verschiedene Datenformate wiedergeben kann, wie beispielsweise pdf, doc, txt, rtf, bmp und/oder ppt. Es ist erfindungsgemäß im ausgerollten bzw. ausgeklappten Zustand so groß, dass mehrere Personen daran arbeiten können, wenn es beispielsweise auf einem Tisch oder anderer ebenen Fläche, wie einem Boden, liegt, oder an einer Wand oder einem geeigneten Ständer angebracht ist.

Außerdem ist mindestens eine Schnittstelle, beispielsweise zu Desktop-Computern und mobilen Endgeräten verfügbar, um einen Datenaustausch zu ermöglichen.

Für einen Export der Daten in Form von Text und Bild, die auf dem erfindungsgemäßen E-paper gemäß Ausführungsbeispiel, dargestellt sind, kann die erfindungsgemäße Anordnung gemäß Weiterbildungen ferner über eine Handschriften- und/oder Bilderkennung verfügen, die dann zum Transport auf andere Geräte diese Inhalte in übliche Dateiformate transformiert, so dass sie weitergegeben werden können.

Obwohl die Erfindung im Detail durch bevorzugte Ausführungsbeispiele näher illustriert und beschrieben wurde, ist die Erfindung nicht durch die offenbarten Beispiele eingeschränkt und andere Variationen können vom Fachmann hieraus abgeleitet werden, die unter den durch die Ansprüche definierten Schutzbereich fallen, ohne den Schutzumfang der Erfindung zu verlassen.

## Patentansprüche

1. Tragbares digitales Anzeigegerät,
derart ausgestaltet, dass
a) durch das Anzeigegerät ein erster Zustand mit einer ersten Dimension einer Grundfläche und ein zweiter Zustand mit einer zweiten Grundfläche einnehmbar ist,
b) im ersten Zustand die Grundfläche im Wesentlichen der Anzeigenfläche entspricht, wobei in diesem Zustand zumindest eine Anzeige von digitalen Inhalten und durch ein erstes Modul durchgeführte Erfassung zumindest von semantischen Inhalten und/oder zumindest einer Steuerungsoption, vorzugsweise jeweils durch Auswertung Modul erfasster Berührungen der Oberfläche, durchführbar ist, und wobei die Größe der Anzeigenfläche derart ausgestaltet ist, dass die Anzeigenfläche als so genanntes Whiteboard senkrecht und/oder waagerecht fixier- und durch eine Vielzahl von Personen zeitgleich nutzbar ist,
c) im zweiten Zustand die Grundfläche derart dimensioniert ist, dass das Anzeigegerät, insbesondere einhändig und/oder in einer Tragetasche, transportierbar ist,
d) es mit einer ersten Schnittstelle zumindest zum Bezug von einer Quelle bereitgestellter darstellbarer digitaler Inhalte eingerichtet ist,
e) es mit einer Energiespeichereinrichtung sowie einer zweiten mit der Energiespeichereinrichtung funktional verbundenen Schnittstelle derart ausgestaltet ist, dass die Energiespeichereinrichtung über die zweite Schnittstelleneinrichtung aufladbar ist.

2. Tragbares digitales Anzeigegerät, nach dem vorhergehenden Anspruch,
**dadurch gekennzeichnet, dass**
die Berührungserfassung durch eine Ausgestaltung der Oberfläche des Anzeigegerätes zur so genannten, insbesondere Multi-, Touchfunktionalität eingerichtet ist.

3. Tragbares digitales Anzeigegerät, nach einem der vorhergehenden Ansprüche,
**dadurch gekennzeichnet, dass**
die Erfassung durch eine integrierte Spracherkennung eingerichtet ist.

4. Tragbares digitales Anzeigegerät, nach einem der vorhergehenden Ansprüche,
**dadurch gekennzeichnet, dass**
die erste Schnittstelle als unidirektionale Bildschnittstelle, beispielsweise nach dem HDMI-Standard, und/oder als bidirektionale drahtgebundene Kommunikationsschnittstelle, beispielsweise eine so genannte USB-Schnittstelle, und/oder bidirektionale drahtlose Kommunikationsschnittstelle, beispielsweise eine nach dem WLAN-, Bluetooth- und/oder einem Nahfeldkommunikationsstandard, wie dem NFC-, Standard, ausgestaltet ist.

5. Tragbares digitales Anzeigegerät, nach einem der vorhergehenden Ansprüche,
**dadurch gekennzeichnet, dass**
die zweite Schnittstelle als, insbesondere zugleich als erste Schnittstelle nutzbar eingerichtete, USB-Schnittstelle ausgestaltet ist.

6. Tragbares digitales Anzeigegerät, nach einem der vorhergehenden Ansprüche,
**dadurch gekennzeichnet, dass**
das Anzeigegerät als so genanntes ePaper ausgestaltet ist, wobei der Übergang vom ersten Zustand zum zweiten Zustand durch ein Rollen und/oder ein Falten des ePapers durchführbar ist.

7. Tragbares digitales Anzeigegerät, nach einem der vorhergehenden Ansprüche,
**dadurch gekennzeichnet, dass**
das erste Modul derart ausgestaltet ist, dass es zur Erkennung von Handschrift- und/oder, insbesondere gesprochenen, Worten ausgestaltet ist und bei Erkennen semantischer Inhalte diese einer Wandlung in ein als mindestens in einem Textformat darstellbares digitales Datum und bei Nichterkennen als grafische Eingabe interpretiertes und als Bild darstellbares digitales Datum unterzieht.

8. Tragbares digitales Anzeigegerät, nach einem der vorhergehenden Ansprüche,
**dadurch gekennzeichnet, dass**
das erste Modul derart ausgestaltet ist, dass es derart die Steuerung des Anzeigegerätes durchführt, dass es
a) zur Erkennung von zumindest einem Steuerzeichen aus erfassten semantischen Inhalten befähigt ist,
b) durch das mindestens eine Steuerzeichen als Befehl und/oder Auswahl markierte Eingaben erfasst,
c) mindestens eine dem Befehl oder der Auswahl zugeordnete Zustandsänderung von zumindest Teilen des Anzeigegerätes und/oder dargestellten Inhalts durchführt.

9. Tragbares digitales Anzeigegerät, nach einem der vorhergehenden Ansprüche,
**dadurch gekennzeichnet, dass**
das Anzeigegerät eine dritte Schnittstelle aufweist, die derart ausgestaltet ist, dass es im ersten Zustand drahtlos übermittelte, elektromagnetische, insbesondere optische, Signale zumindest als innerhalb der Anzeigenfläche auftreffend interpretierbare Bewegung einer entfernten Signalquelle dem ersten Modul zur Erkennung semantischer Inhalte präsentiert.

10. Verfahren zum Betreiben eines tragbaren digitalen Anzeigegerätes nach einem der vorhergehenden Ansprüche.

11. Anordnung zur Durchführung des Verfahrens.
